# FASCICULE DE BREVET EUROPEEN

(11) **EP 0 626 044 B1**
(45) Date de publication et mention de la délivrance du brevet: **05.03.1997**
(21) Numéro de dépôt: 93924079.2
(22) Date de dépôt: 27.10.1993
(51) Int. Cl.: F16D 3/02, B62D 5/083, F16D 3/12

(54) **DISPOSITIF ELASTIQUE DE CENTRAGE ET D'ACCOUPLEMENT A COURSE MORTE DE DEUX ORGANES ROTATIFS**
FEDERNDE ZENTRIERVORRICHTUNG UND TOTGANG-KUPPLUNG FUER ZWEI DREHBEWEGLICHE TEILE
RESILIENT DEVICE FOR LOST MOTION COUPLING AND CENTRING OF TWO ROTARY MEMBERS

(30) Priorité: 17.11.1992 ES 9202312
(43) Date de publication de la demande: 30.11.1994
(73) Titulaire: ALLIEDSIGNAL AUTOMOTIVE ESPANA, S.A., 08400 Barcelona (ES)
(72) Inventeur: CORTES GUASCH, Esteve, E-08304 Barcelone (ES)
(74) Mandataire: Allen, William Guy Fairfax
(86) Numéro de dépôt international: EP9303008
(87) Numéro de publication internationale: WO9411646

(56) Documents cités:
- EP-A- 0 108 930
- EP-A- 0 123 619
- FR-A- 2 221 975
- US-A- 3 789 690
- US-A- 4 118 953

## Description

La présente invention concerne les dispositifs élastiques de centrage et d'accouplement à course morte de deux organes rotatifs.

De tels dispositifs sont prévus pour permettre l'entraînement en rotation d'un des organes par l'autre, tout en permettant un déplacement angulaire relatif limité de ces organes. Ces dispositifs trouvent plus particulièrement leur application dans les distributeurs hydrauliques rotatifs comportant un dispositif menant entraînant un dispositif mené et commandant simultanément un dispositif moteur à double effet fournissant une assistance à l'entraînement du dispositif mené en fonction de l'effort de commande appliqué sur le dispositif menant.

Ces distributeurs hydrauliques rotatifs sont notamment utilisés dans les systèmes de direction assistée de véhicules automobiles. Dans une réalisation connue de ce type de distributeur, celui-ci comprend d'une part un élément rotatif primaire qui est connecté à un dispositif récepteur de la force motrice, en l'occurrence le volant de direction du véhicule, et couplé en rotation à un rotor de valve du distributeur, et d'autre part un élément rotatif secondaire connecté à un dispositif mené, tel qu'un pignon de crémaillère, et couplé à un stator de valve coopérant avec le rotor pour commander un vérin hydraulique à double effet pour fournir une assistance au dispositif mené.

Ces deux éléments se trouvent unis par l'intermédiaire d'un accouplement à course morte qui permet un déplacement angulaire relatif du rotor et du stator de valve pour assurer la commande du dispositif moteur d'assistance et, en arrivant en fin de course morte, l'entraînement simultané du dispositif mené. Ces deux éléments sont d'autre part reliés directement par un organe élastique qui assure une position de centrage réciproque des deux éléments quand le distributeur est au repos.

On connaît ainsi l'emploi d'un organe élastique en forme de barre de torsion, logé dans des cavités appropriées des éléments du distributeur. Ce système ne permet toutefois pas l'application d'une précontrainte sur l'organe élastique, bien que ceci soit cependant souhaitable dans de nombreuses applications de ce type de distributeur.

Le document EP-A-0 123 619 divulgue un distributeur hydraulique rotatif, notamment pour système de direction assistée de véhicule, qui comprend un élément primaire, un élément secondaire coaxial à l'élément primaire et comportant une partie entourant au moins partiellement une partie de l'élément primaire, un moyen de valve de distribution couplé à l'élément primaire et au moins un dispositif élastique déformable présentant au moins une paire de surfaces de butée coopérant avec des premier et second éléments de liaison reliés aux éléments primaire et secondaire pour maintenir ceux-ci en position relative centrée de repos. Le dispositif élastique est monté à coulissement étanche par des faces latérales annulaires opposées dans une cavité annulaire formée dans une pièce unie en rotation à l'élément secondaire, et conformée pour définir dans cette cavité une chambre interne et une chambre externe séparées et de volumes inversement variables. Des moyens sont prévus pour acheminer un fluide sous pression modulable dans au moins une de ces chambres.

Le document US-A-4 118 953 divulgue un couplage élastique centrifuge, qui comprend deux organes avec des éléments de support, et qui est muni d'un anneau élastique coopérant avec les éléments de support. Un organe est réalisé sous forme de moyeu avec des bras, et l'autre organe comporte un moyeu avec une jante entourant l'anneau élastique et l'organe avec des bras. Les éléments de support sont fixés aux bras et à la surface interne de la jante dans les limites de son épaisseur. Ce couplage est prévu pour stabiliser la rotation lors de la transmission de vitesses et de couples élevés, aussi bien que pour compenser les défauts d'alignement des arbres.

On connaît du document EP-A-0 067 572 un distributeur hydraulique rotatif du type rappelé ci-dessus comportant un dispositif élastique de centrage constitué par un ressort en forme de C entre les extrémités duquel sont maintenues prisonnières sous une précontrainte déterminée des saillies radiales respectivement solidaires des éléments rotatifs primaire et secondaire, et un dispositif d'accouplement à course morte constitué par des rouleaux disposés dans des gorges formées dans les éléments rotatifs primaire et secondaire. Une telle conception présente de nombreux inconvénients. Outre un encombrement axial important du dispositif, les rouleaux sont reçus à rotation dans un des éléments rotatifs dans une gorge cylindrique de même diamètre, et sont donc soumis à un frottement de glissement important.

De plus, de tels rouleaux ne procurent aucune réaction mécanique sur l'élément rotatif primaire, mais fournissent seulement une butée mécanique à la fin de la course morte, qui permet, dans ce cas seulement, de transmettre un couple manuel élevé entre l'élément rotatif primaire et l'élément rotatif secondaire.

On connaît d'autre part du document EP-A-0 077 710, un dispositif de centrage et d'accouplement à course morte d'un premier et d'un second organe rotatifs coaxiaux, le second organe rotatif ayant une partie entourant une partie du premier organe, comprenant au moins un ressort en C disposé coaxialement entre les parties des premier et second organes rotatifs et comportant deux zones d'extrémité adjacentes sensiblement symétriques par rapport à un plan médian et reliées l'une à l'autre par une partie de corps partiellement annulaire, chaque zone d'extrémité comportant une première et une seconde arêtes de butée coopérant normalement, en position centrée des premier et second organes rotatifs, chacune en butée respectivement avec une première et une seconde surfaces de butée solidaires respectivement des parties des premier et second organes rotatifs, les premières arêtes de butée étant formées par des pattes d'extrémité s'étendant sensiblement radialement vers l'intérieur et reçues dans un cavité externe de la partie de l'organe rotatif dont les faces en regard forment les premières surfaces de butée.

Dans ce document, les secondes arêtes de butée sont formées par des pattes s'étendant radialement vers l'extérieur des zones d'extrémité du ressort en C et reçues dans une ouverture radiale de la partie du second organe rotatif entourant le premier organe rotatif, les première et seconde surfaces de butée étant sensiblement coplanaires deux à deux et espacées radialement l'une de l'autre d'une distance relativement importante dans un agencement induisant, en fonctionnement, des risques de déplacement, et notamment de vrillage du ressort en C sous l'effet des couples résultant des forces d'action et de réaction décalées entre les pattes externes et internes des zones d'extrémité du ressort en C.

La présente invention a pour objet d'améliorer les dispositifs élastiques de centrage et d'accouplement à course morte en éliminant les inconvénients mentionnés plus haut, assurant un centrage efficace en position de repos et un positionnement correct de ces premier et second organes rotatifs en autorisant un accouplement élastique à course morte entre ces organes, tout en fournissant sur le premier organe une réaction élastique pour, comme dans l'application choisie d'une direction assistée de véhicule, fournir au conducteur une sensation tactile lors de l'actionnement du premier organe et ceci dans un agencement compact et robuste, et de faibles coûts de fabrication.

Pour ce faire, selon l'invention, il est prévu un dispositif élastique de centrage et d'accouplement à course morte d'un premier et d'un second organes rotatifs coaxiaux permettant un déplacement angulaire relatif limité de ces organes, le second organe rotatif ayant une partie entourant une partie du premier organe rotatif, au moins un ressort disposé sensiblement coaxialement entre les parties des premier et second organes rotatifs, des premiers moyens de liaison étant prévus pour faire coopérer le ressort et le premier organe, des seconds moyens de liaison étant prévus pour faire coopérer le ressort et le second organe, les premiers et seconds moyens de liaison assurant le maintien en position centrée de repos du premier organe par rapport au second organe par l'intermédiaire du ressort, au moins l'un des premiers et seconds moyens de liaison permettant le déplacement angulaire relatif limité du ressort, le ressort comportant une partie continue sensiblement annulaire entourant complètement le premier organe, un des moyens de liaison entre le ressort et un des organes comportant au moins une partie faisant saillie radialement du ressort ou de l'organe et coopérant avec au moins une ouverture radiale formée dans l'organe ou le ressort, l'autre moyen de liaison entre le ressort et l'autre organe comportant au moins un élément rotatif à symétrie sphérique ou cylindrique, caractérisé en ce que l'élément rotatif est disposé entre deux évidements présentant chacun, en section transversale, un profil concave en forme de V, et formés l'un sur le ressort et l'autre sur l'autre organe, les profils en forme de V étant alignés en direction radiale dans la position centrée de repos et leurs concavités étant tournées l'une vers l'autre.

D'autres caractéristiques et avantages de la présente invention ressortiront de la description qui suit d'un mode de réalisation donné à titre d'exemple non limitatif, en relation avec les dessins annexés sur lesquels :
- La Figure 1 est une vue schématique en coupe transversale d'un dispositif élastique de centrage et d'accouplement à course morte selon un mode de réalisation de l'invention ;
- La Figure 2 est une vue en coupe longitudinale suivant la ligne II-II de la Figure 1;
- La Figure 3 est une vue en coupe longitudinale suivant la ligne III-III de la Figure 1 ;
- La Figure 4 est une vue schématique en coupe transversale d'un dispositif élastique de centrage et d'accouplement à course morte selon une variante du mode de réalisation de la Figure 1 ;
- La Figure 5 est une vue schématique en coupe transversale d'une variante du mode de réalisation de la Figure 4 ; et
- La Figure 6 est une vue schématique en coupe transversale d'une autre variante du mode de réalisation de la Figure 1.

Sur les différentes figures, les éléments identiques ou équivalents portent les mêmes numéros de référence éventuellement affectés d'un "prime". En faisant référence à ces Figures, la présente invention concerne un dispositif élastique, coopérant avec un premier organe rotatif 10, destiné à être relié à un dispositif d'actionnement, comme par exemple le volant d'un véhicule, et un second organe rotatif 12, coaxial au premier organe 10 et entourant ce dernier, destiné à être relié à un mécanisme entraîné, comme par exemple un mécanisme d'orientation des roues directrices du véhicule.

Les premier et second organes rotatifs coopèrent par l'intermédiaire du dispositif élastique réalisé, conformément à l'invention, sous forme d'un ressort en anneau 14, coaxial aux premier et second organes, entourant de façon continue la partie du premier organe 10 située à l'intérieur du second organe 12.

Le ressort en anneau 14 coopère avec le premier organe rotatif par des premiers moyens de liaison 20, constitués dans cet exemple par au moins un rouleau 20, pressé contre le premier organe rotatif 10 par le ressort en anneau 14, et capable de rouler sur le premier organe rotatif 10 et sur le ressort en anneau 14.

Le ressort en anneau 14 coopère également avec le second organe rotatif 12 par des seconds moyens de liaison, constitués dans l'exemple représenté par au moins une partie en saillie 16 dirigée radialement vers l'extérieur, deux parties en saillie 16 ayant été représentées sur le mode de réalisation pris pour exemple. Chaque partie en saillie 16 du ressort 14 pénètre dans une gorge 18 de forme complémentaire formée dans le second organe rotatif 12.

Dans l'exemple représenté, les bords de la partie en saillie 16 sont parallèles entre eux et avec l'axe de symétrie du dispositif, de même que les flancs de la gorge 18. La position du ressort en anneau 14 est donc fixée par rapport au second organe 12.

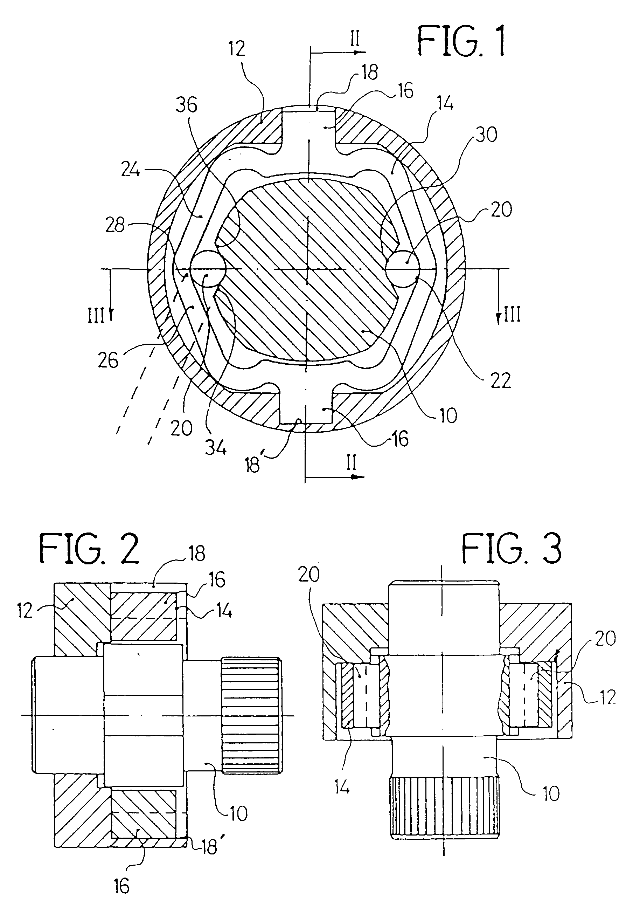

Par assurer le centrage du premier organe par rapport au second, et donc par rapport au ressort 14, ce dernier présente, en section transversale, au moins un profil concave 22 s'étendant en direction axiale en forme de V. De façon plus précise, et comme on l'a représenté sur la Figure 1, le profil concave 22 est formé de deux branches rectilignes 24, 26 réunies par une partie courbe 28 présentant, à l'intérieur de l'anneau 14, un rayon de courbure égal au rayon du rouleau 20. Parallèlement, le premier organe rotatif 10 est formé sur sa périphérie extérieure avec au moins une gorge ou évidement concave 30 en forme de V, s'étendant en direction axiale et comportant un fond arrondi ayant un rayon de courbure égal au rayon du rouleau 20 et des bords rectilignes 34, 36.

On voit donc que, dans la position de repos représentée aux Figures 1 à 3, le ressort en anneau 14 est parfaitement positionné autour du premier organe rotatif 10 par l'intermédiaire des rouleaux 20, pressés dans le fond des gorges 30 du premier organe 10 par les profils 22 de l'anneau 14, et à l'intérieur du second organe rotatif par l'intermédiaire des parties en saillie 16 pénétrant dans les gorges 18 de forme complémentaire du second organe rotatif 12. Dans cette position de repos, les profils concaves 22 et 30 du ressort 14 et du premier organe rotatif 10 sont alignés en direction radiale, et ont leurs concavités tournées l'une vers l'autre pour enserrer les rouleaux 20, de sorte que les premier et second organes rotatifs 10 et 12 sont couplés en rotation.

De la sorte, si un couple moteur est appliqué au premier organe rotatif 10, et que second organe rotatif 12 n'exerce aucun couple résistant, celui-ci sera entraîné en rotation par le premier organe rotatif 10.

Par contre, il peut arriver, comme dans l'application préférée du dispositif à une direction assistée de véhicule, que le second organe rotatif 12 exerce un couple résistant plus ou moins important. Dans ce cas, ce couple résistant est transmis du second organe rotatif 12 à l'anneau 14. Il s'ensuit que les rouleaux 20 sont soumis à l'action exercée par le couple moteur transmis par le premier organe rotatif 10 par l'intermédiaire de la gorge 30, et à la réaction exercée par le couple résistant transmis par le ressort en anneau 14 par l'intermédiaire du profil concave 22.

En d'autres termes, un des bords rectilignes de la gorge 30 du premier organe rotatif 10, par exemple le bord 34, exerce une poussée sur le rouleau 20 qui transmet cette poussée sur une des branches rectilignes du profil concave 22 du ressort en anneau 14, par exemple la branche 24, qui va alors se déformer élastiquement.

De façon avantageuse grâce à l'invention, on peut réaliser le profil concave en forme de V du ressort en anneau 14 et la gorge concave 30 du premier organe rotatif 10 de façon que, dans la position centrée de repos, les bords rectilignes 34 et 36 ainsi que les branches rectilignes 24 et 26 aient la même inclinaison par rapport à l'axe de symétrie du système. Ainsi, les bords rectilignes 34 et 36 et les branches rectilignes 24 et 26 sont parallèles deux à deux, la branche 24 étant parallèle au bord 34, comme l'indiquent leurs prolongements représentés en pointillés, et la branche 26 étant parallèle au bord 36.

Il résulte de ce qui précède que le rouleau 20 est alors situé entre deux surfaces parallèles, 24 et 34 dans l'exemple ci-dessus, et transmet l'action du bord 34 à la branche 24. Il s'ensuit que les forces agissant sur le rouleau 20 sont normales aux surfaces parallèles formées par le bord 34 et la branche 24, et donc qu'elles passent le centre du rouleau 20. Lors de l'actionnement du premier organe rotatif 10, le rouleau 20 sera donc amené à rouler sur ce dernier et à l'intérieur du ressort en anneau 14 pour déformer élastiquement celui-ci, tout glissement entre le rouleau 20 et le premier organe rotatif 10 ou le ressort en anneau 14 étant évité.

On voit d'autre part que la force qu'exerce le rouleau 20 sur la branche rectiligne 24 perpendiculairement à celle-ci peut être décomposée en une composante radiale, tendant à déformer élastiquement cette branche du ressort en anneau 14, et une composante tangentielle, tendant à produire un couple sur le ressort en anneau 14, transmis par celui-ci au second organe rotatif 12 par les parties en saillie 16.

Le rouleau 20 exerce pareillement sur le bord rectiligne 34 perpendiculaire à celui-ci une force qui peut être décomposée en une composante radiale, représentant la réaction à la déformation élastique du ressort en anneau, et sans conséquence sur le premier organe rotatif 10 indéformable par hypothèse, et une composante tangentielle, tendant à produire un couple de réaction sur le premier organe rotatif 10. C'est ce couple de réaction qui est transmis au dispositif d'actionnement du premier organe rotatif 10 et qui, dans l'application à une direction assistée du véhicule, fournit au conducteur la sensation tactile recherchée.

Le premier organe rotatif 10 entraîne donc bien en rotation le second organe rotatif 12 par l'intermédiaire du ressort en anneau 14, procurant une certaine élasticité et permettant une certaine course morte entre les deux organes rotatifs 10 et 12 lors du roulement des rouleaux 20 sur le premier organe rotatif 10, et à l'intérieur du ressort en anneau 14.

Le ressort en anneau 14 assure par ailleurs un centrage précis et efficace des organes rotatifs en position de repos, par la contrainte qu'il exerce sur les rouleaux 20 en les maintenant au fond des gorges 30. On conçoit alors aisément qu'il est possible de déterminer par avance l'efficacité ou l'intensité de cet effet de centrage, en choisissant un ressort 14 de plus ou moins grande rigidité.

De même, on pourra influer sur la longueur de la course morte admise entre les organes rotatifs en donnant aux branches 24 et 26 du ressort 14 et aux bords 34 et 36 de la gorge 30 une plus ou moins grande inclinaison par rapport à l'axe de symétrie du dispositif.

D'autre part, lorsque le ressort 14 se déforme, les parties en saillie 16 peuvent être amenées à se déplacer dans les gorges 18. Le dispositif présente alors une hysteresis de fonctionnement, que l'invention permet facilement de maîtriser, et même d'annuler. En effet, en donnant aux gorges 18 une forme exactement complémentaire à celle des parties en saillie 16, comme on l'a représenté pour la gorge 18' sur la partie inférieure des Figures 1 et 2, un tel déplacement des parties en saillie 16 est devenu impossible, et le dispositif n'a plus d'hysteresis.

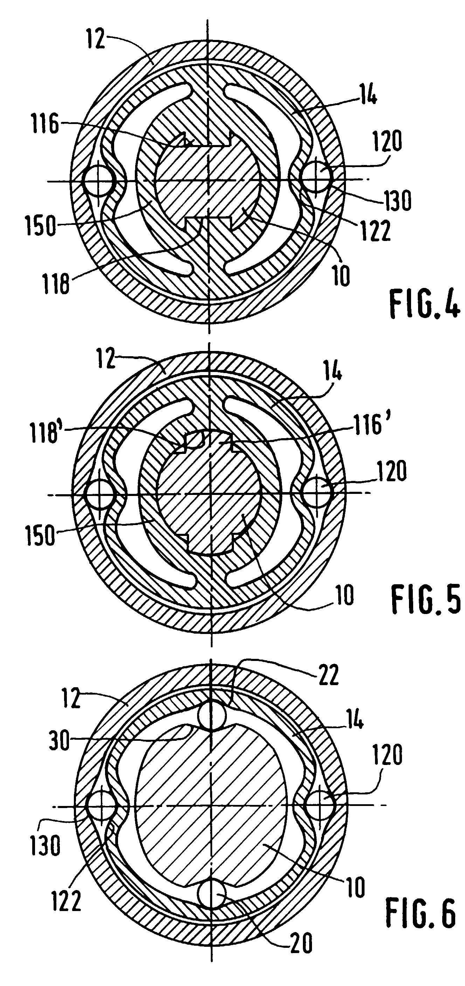

On a représenté sur la Figure 4 une variante du dispositif qui vient d'être décrit, dans laquelle les premiers et les seconds moyens de liaison entre le ressort 14 et respectivement le premier et le second organe rotatif ont été inversés.

On voit sur cette Figure que le ressort en anneau 14 coopère avec le premier organe rotatif 10, par des premiers moyens de liaisons constitués par des parties en saillie 116 dirigée radialement vers l'intérieur et pénétrant dans des gorges 118 de forme complémentaire formées dans le premier organe rotatif 10.

Le ressort en anneau 14 coopère également avec le second organe rotatif 12 par des seconds moyens de liaison constitués par des rouleaux 120 pressés contre le second organe rotatif par le ressort 14.

Des profils concaves 122 et 30 en forme de V à fond arrondi analogues à ceux du mode de réalisation précédent, sont formés respectivement sur le ressort 14 et sur le second organe rotatif 12. De la sorte, les organes rotatifs 10 et 12 sont parfaitement centrés l'un par rapport à l'autre en position de repos, et sont accouplés en rotation avec une course morte de façon réglable.

Comme on l'a vu plus haut, l'hysteresis du dispositif, dû à un éventuel glissement des parties en saillie 116 dans les gorges 118, pourra être évitée en munissant le ressort 14 d'une seconde partie annulaire 150, entourant le premier organe rotatif 10, et empêchant tout mouvement radial des parties en saillie 116.

La Figure 5 représente une variante de mode de réalisation de la Figure 4, dans lequel la liaison entre le premier organe rotatif 10 et le ressort 14 est obtenue par des parties en saillie 116' s'étendant radialement vers l'extérieur du premier organe rotatif 10 et pénétrant dans des gorges 118' de forme complémentaire formées dans le ressort 14. Une partie annulaire 150 peut là encore être prévue sur le ressort 14 de façon à éliminer l'hysteresis du dispositif.

La Figure 6 représente encore une autre variante de réalisation, combinant certaines caractéristiques des modes de réalisation précédents.

Le ressort en anneau 14 coopère avec le premier organe rotatif 10, comme dans le mode de réalisation des Figures 1 à 3, par des premiers moyens de liaison constitués par des rouleaux 20 maintenus entre des profils concaves 22 et 30 formés respectivement sur le ressort 14 et le premier organe rotatif 10.

Le ressort en anneau 14 coopère de la même façon avec le second organe rotatif 12, comme dans le mode de réalisation des Figures 4 et 5, par des seconds moyens de liaison constitués par des rouleaux 120 maintenus entre des profils concaves 122 et 130 formés respectivement sur le ressort 14 et le second organe rotatif 12.

Les organes rotatifs 10 et 12 sont là encore parfaitement et précisément centrés l'un par rapport à l'autre en position de repos, et sont accouplés en rotation.

Le dispositif de la Figure 6 ne présente par construction aucune hysteresis. Il permet de plus de déterminer les caractéristiques du couplage dans une vaste étendue, en choisissant des rouleaux 20 et 120 de rayons égaux ou différents, et des profils en V 122 et 130 d'une part, et 22 et 30 d'autre part, dont les parois forment des angles égaux ou différents.

On a donc bien réalisé, conformément à la présente invention, un dispositif élastique de centrage et d'accouplement à course morte compact et robuste, d'installation facile puisqu'il ne nécessite aucun ajustement ultérieur des différentes pièces, celles-ci se trouvant dès l'installation dans une position relative parfaitement déterminée. Un tel dispositif est également particulièrement économique, puisque ne nécessitant que des usinages simples et faciles à réaliser sur les organe rotatifs.

Bien entendu, l'invention n'est pas limitée au mode de réalisation qui vient d'être décrit, mais est susceptible de recevoir de nombreuses modifications qui apparaîtront à l'homme du métier. C'est ainsi que le ressort en anneau, au lieu d'être constitué d'une seule pièce, pourra être réalisé par un empilement de plusieurs anneaux en lame à ressort, présentant tous la forme représentée sur les Figures 1 et 4 à 6. De même, au lieu d'utiliser des rouleaux comme moyen de liaison entre le ressort en anneau et le premier organe rotatif, on pourra préférer pour certaines applications l'utilisation de billes. Le ressort en anneau pourra également présenter un nombre de parties en saillie différent de deux, par exemple une seule, ou trois disposées à 120° ou quatre disposées à 90°, de même qu'un nombre de profils concaves différent de deux, par exemple un seul, ou trois disposés à 120° ou quatre disposés à 90°.

De plus, si on le désire, le degré d'interaction entre le ressort en anneau et le premier organe rotatif, procurant la réaction sur le premier organe rotatif, peut être ajusté à volonté. Par exemple, le fond arrondi des profils en forme de V formés sur le premier organe rotatif et/ou sur le ressort en anneau et/ou sur le second organe rotatif peut avoir un rayon de courbure inférieur au rayon de la bille ou du rouleau. De la même manière, les parois des profils en forme de V formés sur le premier organe rotatif et sur le ressort en anneau peuvent former, dans la position centrée de repos du premier organe rotatif par rapport au second organe rotatif, un angle faible, par exemple inférieur à 10°, de façon à être substantiellement parallèles deux à deux.

## Revendications

1. Dispositif élastique de centrage et d'accouplement à course morte d'un premier (10) et d'un second (12) organes rotatifs coaxiaux permettant un déplacement angulaire relatif limité de ces organes, le second organe rotatif (12) ayant une partie entourant une partie du premier organe rotatif (10), au moins un ressort (14) disposé sensiblement coaxialement entre les parties des premier (10) et second (12) organes rotatifs, des premiers moyens de liaison étant prévus pour faire coopérer le ressort (14) et le premier organe (10), des seconds moyens de liaison étant prévus pour faire coopérer le ressort (14) et le second organe (12), les premiers et seconds moyens de liaison assurant le maintien en position centrée de repos du premier organe (10) par rapport au second organe (12) par l'intermédiaire du ressort (14), au moins l'un des premiers et seconds moyens de liaison permettant le déplacement angulaire relatif limité du ressort (14), le ressort (14) comportant une partie continue sensiblement annulaire entourant complètement le premier organe (10), un des moyens de liaison entre le ressort (14) et un des organes (10,12) comportant au moins une partie faisant saillie radialement du ressort ou de l'organe et coopérant avec au moins une ouverture radiale formée dans l'organe ou le ressort, l'autre moyen de liaison entre le ressort et l'autre organe comportant au moins un élément rotatif à symétrie sphérique ou cylindrique, caractérisé en ce que l'élément rotatif est disposé entre deux évidements présentant chacun, en section transversale, un profil concave en forme de V, et formés l'un sur le ressort (14) et l'autre sur l'autre organe, les profils en forme de V étant alignés en direction radiale dans la position centrée de repos et leurs concavités étant tournées l'une vers l'autre.

2. Dispositif selon la revendication 1, caractérisé en ce que le fond des profils en forme de V est arrondi et possède un rayon de courbure inférieur ou égal au rayon de l'élément rotatif.

3. Dispositif selon la revendication 2, caractérisé en ce que les parois des profils en forme de V formés sur le ressort et sur l'autre organe sont substantiellement parallèles deux à deux lorsque les premiers et second organes rotatifs sont en position centrée de repos.

4. Dispositif selon la revendication 3, caractérisé en ce que le premier moyen de liaison comporte au moins un élément rotatif à symétrie sphérique ou cylindrique disposé entre un évidement en forme de V formé sur la périphérie extérieure du premier organe rotatif et un évidement en forme de V formé sur la périphérie intérieure du ressort, et en ce que le second moyen de liaison comporte au moins une partie faisant saillie radialement vers l'extérieur du ressort et coopérant avec au moins une ouverture radiale formée dans la partie du second organe entourant le premier organe.

5. Dispositif selon la revendication 1, caractérisé en ce que le premier moyen de liaison comporte au moins un élément rotatif à symétrie sphérique ou cylindrique disposé entre un évidement en forme de V formé sur la périphérie extérieure du premier organe rotatif et un évidement en forme de V formé sur la périphérie intérieure du ressort, et en ce que le second moyen de liaison comporte au moins une partie faisant saillie radialement vers l'intérieur du second organe et coopérant avec au moins une ouverture radiale formée dans le ressort.

6. Dispositif selon la revendication 3, caractérisé en ce que le premier moyen de liaison comporte au moins une partie faisant saillie radialement vers l'extérieur du premier organe et coopérant avec au moins une ouverture radiale du ressort, et en ce que le second moyen de liaison comporte au moins un élément rotatif à symétrie sphérique ou cylindrique disposé entre un évidement en forme de V formé sur la périphérie intérieure du second organe rotatif et un évidement en forme de V formé sur la périphérie extérieure du ressort.

7. Dispositif selon la revendication 3, caractérisé en ce que le premier moyen de liaison comporte au moins une partie faisant saillie radialement vers l'intérieur du ressort et coopérant avec au moins une ouverture radiale du premier organe rotatif et en ce que le second moyen de liaison comporte au moins un élément rotatif à symétrie sphérique ou cylindrique disposé entre un évidement en forme de V formé sur la périphérie intérieure du second organe rotatif et un évidement en forme de V-formé sur la périphérie extérieure du ressort.

8. Dispositif selon la revendication 1, caractérisé en ce que le premier moyen de liaison comporte au moins un élément rotatif à symétrie sphérique ou cylindrique disposé entre deux évidements présentant chacun, en section transversale, un profil en forme de V et formés l'un sur la périphérie intérieure du ressort et l'autre sur la périphérie extérieure du premier organe rotatif, et en ce que le second moyen de liaison comporte au moins un élément rotatif à symétrie sphérique ou cylindrique disposé entre deux évidements présentant chacun, en section transversale un profil en forme de V et formés l'un sur la périphérie extérieure du ressort et l'autre sur la périphérie intérieure du second organe rotatif, les profils en forme de V de chaque moyen de liaison étant alignés en direction radiale dans la position centrée de repos et leurs concavités étant tournées l'une vers l'autre.

9. Dispositif selon la revendication 8, caractérisé en ce que le fond des profils en V de chaque moyen de liaison est arrondi et possède un rayon de courbure inférieur ou égal au rayon de l'élément rotatif associé à ce moyen de liaison.

10. Dispositif selon la revendication 9, caractérisé en ce que les parois des profils en forme de V de chaque moyen de liaison sont substantiellement parallèles deux à deux lorsque les premier et second organes rotatifs sont en position centrée de repos.

11. Dispositif selon la revendication 10, caractérisé en ce que les rayons des éléments rotatifs associés aux premiers et aux seconds moyens de liaisons sont égaux.

12. Dispositif selon la revendication 10, caractérisé en ce que les angles formés par les parois des profils en forme de V de chaque moyen de liaison sont égaux.

## Patentansprüche

1. Elastische Vorrichtung zum Zentrieren und zur Kupplung mit Totgang eines ersten (10) und eines zweiten (12) drehbaren Organs, die koaxial sind, welche eine begrenzte relative Winkelverschiebung dieser Organe ermöglicht, wobei das zweite drehbare Organ (12) einen Teil aufweist, der einen Teil des ersten drehbaren Organs (10) umschließt, wobei wenigstens eine Feder (14) im wesentlichen koaxial zwischen den Teilen des ersten (10) und des zweiten (12) drehbaren Organs angeordnet ist, wobei erste Verbindungsmittel vorgesehen sind, um die Feder (14) und das erste Organ (10) zusammenwirken zu lassen, wobei zweite Verbindungsmittel vorgesehen sind, um die Feder (14) und das zweite Organ (12) zusammenwirken zu lassen, wobei die ersten und zweiten Verbindungsmittel sicherstellen, daß das erste Organ (10) mittels der Feder (14) bezüglich des zweiten Organs (12) in einer zentrierten Ruhestellung gehalten wird, wobei wenigstens eines der ersten und zweiten Verbindungsmittel die begrenzte relative Winkelverschiebung der Feder (14) ermöglicht, wobei die Feder (14) einen im wesentlichen ringförmigen zusammenhängenden Teil umfaßt, der das erste Organ (10) vollständig umschließt, wobei eines der Verbindungsmittel zwischen der Feder (14) und einem der Organe (10, 12) wenigstens einen radial vorstehenden Teil der Feder oder des Organs umfaßt, der mit wenigstens einer in dem Organ oder der Feder ausgebildeten radialen Öffnung zusammenwirkt, wobei das andere Verbindungsmittel zwischen der Feder und dem anderen Organ wenigstens ein kugelsymmetrisches oder zylindersymmetrisches drehbares Element umfaßt, dadurch gekennzeichnet, daß das drehbare Element zwischen zwei Aussparungen angeordnet ist, die im Querschnitt jeweils ein konkaves V-förmiges Profil aufweisen und von denen eine an der Feder (14) und die andere an dem anderen Organ ausgebildet ist, wobei die V-förmigen Profile in der zentrierten Ruhestellung in radialer Richtung aufeinander ausgerichtet sind und ihre Konkavitäten einander zugewandt sind.

2. Vorrichtung nach Anspruch 1, dadurch gekennzeichnet, daß der Boden der V-förmigen Profile abgerundet ist und einen Krümmungsradius besitzt, der kleiner oder gleich dem Radius des drehbaren Elementes ist.

3. Vorrichtung nach Anspruch 2, dadurch gekennzeichnet, daß die Wände der an der Feder und an dem anderen Organ ausgebildeten V-förmigen Profile im wesentlichen paarweise zueinander parallel sind, wenn sich das erste und das zweite drehbare Organ in der zentrierten Ruhestellung befinden.

4. Vorrichtung nach Anspruch 3, dadurch gekennzeichnet, daß das erste Verbindungsmittel wenigstens ein kugelsymmetrisches oder zylindersymmetrisches drehbares Element umfaßt, das zwischen einer am Außenumfang des ersten drehbaren Organs ausgebildeten V-förmigen Aussparung und einer am Innenumfang der Feder ausgebildeten V-förmigen Aussparung angeordnet ist, und dadurch, daß das zweite Verbindungsmittel wenigstens einen radial nach außen vorstehenden Teil der Feder umfaßt, der mit wenigstens einer in dem das erste Organ umschließenden Teil des zweiten Organs ausgebildeten radialen Öffnung zusammenwirkt.

5. Vorrichtung nach Anspruch 1, dadurch gekennzeichnet, daß das erste Verbindungsmittel wenigstens ein kugelsymmetrisches oder zylindersymmetrisches drehbares Element umfaßt, das zwischen einer am Außenumfang des ersten drehbaren Organs ausgebildeten V-förmigen Aussparung und einer am Innenumfang der Feder ausgebildeten V-förmigen Aussparung angeordnet ist, und dadurch, daß das zweite Verbindungsmittel wenigstens einen radial nach innen vorstehenden Teil des zweiten Organs umfaßt, der mit wenigstens einer in der Feder ausgebildeten radialen Öffnung zusammenwirkt.

6. Vorrichtung nach Anspruch 3, dadurch gekennzeichnet, daß das erste Verbindungsmittel wenigstens einen radial nach außen vorstehenden Teil des ersten Organs umfaßt, der mit wenigstens einer radialen Öffnung der Feder zusammenwirkt, und dadurch, daß das zweite Verbindungsmittel wenigstens ein kugelsymmetrisches oder zylindersymmetrisches drehbares Element umfaßt, das zwischen einer am Innenumfang des zweiten drehbaren Organs ausgebildeten V-förmigen Aussparung und einer am Außenumfang der Feder ausgebildeten V-förmigen Aussparung angeordnet ist.

7. Vorrichtung nach Anspruch 3, dadurch gekennzeichnet, daß das erste Verbindungsmittel wenigstens einen radial nach innen vorstehenden Teil der Feder umfaßt, der mit wenigstens einer radialen Öffnung des ersten drehbaren Organs zusammenwirkt, und dadurch, daß das zweite Verbindungsmittel wenigstens ein kugelsymmetrisches oder zylindersymmetrisches drehbares Element umfaßt, das zwischen einer am Innenumfang des zweiten drehbaren Organs ausgebildeten V-förmigen Aussparung und einer am Außenumfang der Feder ausgebildeten V-förmigen Aussparung angeordnet ist.

8. Vorrichtung nach Anspruch 1, dadurch gekennzeichnet, daß das erste Verbindungsmittel wenigstens ein kugelsymmetrisches oder zylindersymmetrisches drehbares Element umfaßt, das zwischen zwei Aussparungen angeordnet ist, die im Querschnitt jeweils ein V-förmiges Profil aufweisen und von denen eine am Innenumfang der Feder und die andere am Außenumfang des ersten drehbaren Organs ausgebildet ist, und dadurch, daß das zweite Verbindungsmittel wenigstens ein kugelsymmetrisches oder zylindersymmetrisches drehbares Element umfaßt, das zwischen zwei Aussparungen angeordnet ist, die im Querschnitt jeweils ein V-förmiges Profil aufweisen und von denen eine am Außenumfang der Feder und die andere am Innenumfang des zweiten drehbaren Organs ausgebildet ist, wobei die V-förmigen Profile eines jeden Verbindungsmittels in der zentrierten Ruhestellung in radialer Richtung aufeinander ausgerichtet sind und ihre Konkavitäten einander zugewandt sind.

9. Vorrichtung nach Anspruch 8, dadurch gekennzeichnet, daß der Boden der V-Profile eines jeden Verbindungsmittels abgerundet ist und einen Krümmungsradius besitzt, der kleiner oder gleich dem Radius des zu diesem Verbindungsmittel gehörigen drehbaren Elementes ist.

10. Vorrichtung nach Anspruch 9, dadurch gekennzeichnet, daß die Wände der V-förmigen Profile eines jeden Verbindungsmittels im wesentlichen paarweise zueinander parallel sind, wenn sich das erste und das zweite drehbare Organ in der zentrierten Ruhestellung befinden.

11. Vorrichtung nach Anspruch 10, dadurch gekennzeichnet, daß die Radien der zu den ersten und zu den zweiten Verbindungsmitteln gehörigen drehbaren Elemente gleich sind.

12. Vorrichtung nach Anspruch 10, dadurch gekennzeichnet, daß die Winkel, die von den Wänden der V-förmigen Profile eines jeden Verbindungsmittels gebildet werden, gleich sind.

## Claims

1. Elastic device for centring and coupling, with backlash, a first (10) and second (12) coaxial rotary member permitting a limited relative angular displacement of these members, the second rotary member (12) having a portion surrounding a portion of the first rotary member (10), at least one spring (14) arranged substantially coaxially between the portions of the first (10) and second (12) rotary members, first linking means being provided to make the spring (14) and the first member (10) interact, second linking means being provided to make the spring (14) and the second member (12) interact, the first and second linking means ensuring the first member (10) is held in the centred rest position relative to the second member (12) by means of the spring (14), at least one of the first and second linking means allowing the limited relative angular displacement of the spring (14), the spring (14) comprising a substantially annular continuous portion completely surrounding the first member (10), one of the means for linking between the spring (14) and one of the members (10, 12) comprising at least one part projecting radially from the spring or from the member and interacting with at least one radial opening formed in the member or in the spring, the other means for linking between the spring and the other member comprising at least one rotary element with spherical or cylindrical symmetry, characterized in that the rotary element is arranged between two recesses, each one having, in transverse section, a concave V-shaped profile, and which are formed, for one of them, on the spring (14) and, for the other, on the other member, the V-shaped profiles being aligned in a radial direction in the centred rest position and their concavities pointing towards one another.

2. Device according to Claim 1, characterized in that the bottom of the V-shaped profiles is rounded and has a radius of curvature less than or equal to the radius of the rotary element.

3. Device according to Claim 2, characterized in that the walls of the V-shaped profiles formed on the spring and on the other member are substantially parallel in pairs when the first and second rotary members are in the centred rest position.

4. Device according to Claim 3, characterized in that the first linking means comprises at least one rotary element with spherical or cylindrical symmetry, arranged between a V-shaped recess formed on the external periphery of the first rotary member and a V-shaped recess formed on the internal periphery of the spring, and in that the second linking means comprises at least one part projecting radially towards the outside of the spring and interacting with at least one radial opening formed in the portion of the second member surrounding the first member.

5. Device according to Claim 1, characterized in that the first linking means comprises at least one rotary element with spherical or cylindrical symmetry arranged between a V-shaped recess formed on the external periphery of the first rotary member and a V-shaped recess formed on the internal periphery of the spring, and in that the second linking means comprises at least one portion projecting radially towards the inside of the second member and interacting with at least one radial opening formed in the spring.

6. Device according to Claim 3, characterized in that the first linking means comprises at least one portion projecting radially towards the outside of the first member and interacting with at least one radial opening in the spring, and in that the second linking means comprises at least one rotary element with spherical or cylindrical symmetry arranged between a V-shaped recess formed on the internal periphery of the second rotary member and a V-shaped recess formed on the external periphery of the spring.

7. Device according to Claim 3, characterized in that the first linking means comprises at least one portion projecting radially towards the inside of the spring and interacting with at least one radial opening in the first rotary member, and in that the second linking means comprises at least one rotary element with spherical or cylindrical symmetry arranged between a V-shaped recess formed on the internal periphery of the second rotary member and a V-shaped recess formed on the external periphery of the spring.

8. Device according to Claim 1, characterized in that the first linking means comprises at least one rotary element with spherical or cylindrical symmetry arranged between two recesses, each one having, in transverse section, a V-shaped profile and which are formed, for one of them, on the internal periphery of the spring and, for the other, on the external periphery of the first rotary member, and in that the second linking means comprises at least one rotary element with spherical or cylindrical symmetry arranged between two recesses, each one having, in transverse section, a V-shaped profile and which are formed, for one of them, on the external periphery of the spring and, for the other, on the internal periphery of the second rotary member, the V-shaped profiles of each linking means being aligned in a radial direction in the centred rest position and their concavities pointing towards one another.

9. Device according to Claim 8, characterized in that the bottom of the V-shaped profiles of each linking means is rounded and has a radius of curvature less than or equal to the radius of the rotary element associated with this linking means.

10. Device according to Claim 9, characterized in that the walls of the V-shaped profiles of each linking means are substantially parallel in pairs when the first and second rotary members are in the centred rest position.

11. Device according to Claim 10, characterized in that the radii of the rotary elements associated with the first and with the second linking means are equal.

12. Device according to Claim 10, characterized in that the angles formed by the walls of the V-shaped profiles of each linking means are equal.
